# EUROPÄISCHE PATENTSCHRIFT

(11) **EP 2 629 924 B1**
(45) Veröffentlichungstag und Bekanntmachung des Hinweises auf die Patenterteilung: **08.06.2016**
(21) Anmeldenummer: 11764767.7
(22) Anmeldetag: 07.10.2011
(51) Int. Cl.: B23K 37/00, B23K 26/70, F16P 1/06, B23K 26/38, B23K 26/12

(54) **LASERSCHUTZKABINE UND LASERBEARBEITUNGSANLAGE DAMIT**
LASER PROTECTION CABIN AND LASER MACHINING SYSTEM EQUIPPED THEREWITH
CABINE DE PROTECTION LASER ET INSTALLATION DE TRAITEMENT AU LASER COMPORTANT LADITE CABINE

(30) Priorität: 18.10.2010 DE 102010042564
(43) Veröffentlichungstag der Anmeldung: 28.08.2013
(73) Patentinhaber: Trumpf Laser- und Systemtechnik GmbH, 71254 Ditzingen (DE)
(72) Erfinder: WEBER, Jörg, 74182 Obersulm (DE); PÖPPELMANN, Jörg, 70499 Stuttgart (DE); HECK, Peter, 71272 Renningen (DE)
(74) Vertreter: Kohler Schmid Möbus Patentanwälte
(86) Internationale Anmeldenummer: PCT/EP2011/067527
(87) Internationale Veröffentlichungsnummer: WO 2012/052304

(56) Entgegenhaltungen:
- EP-A1- 1 908 546
- DE-C1- 19 629 037
- FR-A1- 2 832 946
- US-A- 4 107 522
- US-A- 4 650 287

## Beschreibung

Die Erfindung betrifft eine Laserschutzkabine zur Abgrenzung eines Arbeitsraums für die Laserbearbeitung von einer Arbeitsraumumgebung, umfassend einen ersten Deckenbereich, und einen zweiten seitlichen Wandbereich, siehe, z.B., EP 1 908 546 A1. Die Erfindung betrifft weiterhin eine Laserbearbeitungsanlage mit einer solchen Laserschutzkabine (siehe Anspruch 9).

Laserschutzkabinen dienen zur Abschirmung von Arbeitsräumen, in denen Laserbearbeitungsmaschinen betrieben werden. Eine solche Abschirmung gegen die Arbeitsraumumgebung ist insbesondere aus Gründen des Arbeitsschutzes vorgeschrieben. Gemäß den einschlägigen Sicherheitsvorschriften muss gewährleistet sein, dass unter anderem auch bei irregulären Betriebszuständen der Laserbearbeitungsmaschine und zumindest für eine begrenzte Zeitdauer keine schädliche Laserstrahlung aus dem Arbeitsrauminneren in die Arbeitsraumumgebung austreten kann.

Die EP 1 908 546 A1 offenbart einen Arbeitsraum mit einer Laserbearbeitungsmaschine im Arbeitsrauminneren, der durch eine Laserschutzkabine gegen die Arbeitsraumumgebung abgeschirmt ist. Die Laserschutzkabine weist an ihrer der Laserbearbeitungsmaschine zugewandten Seite einen Laserstrahlreflektor auf, mittels dessen der überwiegende Teil der von der Laserbearbeitungsmaschine stammenden und auf den Laserstrahlreflektor einfallenden Laserstrahlung diffus reflektiert wird. Als Laserstrahlreflektor kann z.B. eine diffus reflektierende Metalloberfläche, insbesondere eine Aluminiumoberfläche, dienen, die z.B. mit unregelmäßig profilierten Oberflächenstrukturen versehen werden kann, um eine intensive Streuung des Laserlichts zu bewirken. Aluminium ist als Werkstoff für den Laserstrahlreflektor wegen seines geringen Gewichts und seiner verhältnismäßig geringen Wärmeleitfähigkeit besonders geeignet.

Die US 4,650,287 A offenbart eine Laserschutzwand mit einem metallischen Substrat, auf das eine strahlungsabsorbierende Beschichtung in Form einer durch Flammspritzen aufgebrachten keramischen Metalloxidschicht vorgesehen ist. Eine Oberfläche des metallischen Substrats weist Unebenheiten auf, deren Höhe größer ist als die Dicke der Metalloxidschicht, so dass die Oberseite der Metalloxidschicht im Wesentlichen die Unebenheiten des metallischen Substrats reproduziert. Die keramische Metalloxidschicht kann z.B. aus einer Kombination von Al₂O₃ und TiO₂ bestehen und ist in der US 4,650,287 A als außerordentlich hitzebeständig und absorbierend beschrieben.

Die US 5,309,925 beschreibt eine reflektierende Metallfolie, an der zum Schutz von Personen vor Laserstrahlung eine Oberflächenstruktur angebracht ist, welche einen auf die Folie auftreffenden Laserstrahl diffus reflektiert, d.h. in eine Mehrzahl von Richtungen streut.

Die DE 20 2006 006 823 U1 beschreibt ein nicht brennbares textiles Flächengebilde, auf dem an mindestens einer Seite eine Folienwerkstoff-Lage aufgebracht ist, die auf ihrer nach außen gewandten Seite mindestens eine mittels eines thermischen Beschichtungsverfahrens aufgebrachte Metall- oder oxid-keramische Beschichtung aufweist und die den auftreffenden Laserstrahl durch Einkoppeln und anschließendes diffuses Streuen sehr effizient streuen soll. Die Folienwerkstoff-Lage kann aus einem hoch reflektierenden Metall, z.B. aus Aluminium, bestehen, und die Wahl der verfahrenstechnischen Parameter beim thermischen Beschichten können so gewählt werden, dass die Absorption und Widerstandsfähigkeit des Materials gesteigert werden.

Zur Erhöhung der Absorption von Laserstrahlung ist es ferner z.B. aus der DE 19736042 A1 bekannt, die innere Oberfläche einer Strahlfalle zu schwärzen.

Bei der in der EP 1 908 546 A1 beschriebenen Laserschutzkabine ist vorgesehen, die Arbeitsraumumgebung vor der Laserstrahlung der Laserbearbeitungsmaschine zu schützen. Befinden sich mehrere Arbeitsbereiche in dem Arbeitsraum der Laserschutzkabine, kann in einem ersten Arbeitsbereich eine Laserbearbeitung stattfinden, während sich in einem zweiten Arbeitsbereich eine Person in dem Arbeitsraum aufhalten kann, z.B. um an dem zweiten Arbeitsbereich Tätigkeiten wie z.B. eine Endkontrolle der Laserbearbeitung oder einen Be- bzw. Entladevorgang vorzunehmen. Teilen sich verschiedene Arbeitsbereiche gemeinsame Betriebsmittel, z.B. einen Bearbeitungskopf der Laserbearbeitungsmaschine, können die Arbeitsbereiche in der Regel nicht ohne weiteres vollständig lichtdicht voneinander separiert werden, so dass Laserstrahlung von einem Arbeitsbereich ungewollt in den anderen Arbeitsbereich gelangen kann.

Bei einer derartigen Laserbearbeitungsanlage, wie sie die Anmelderin z.B. in der so genannten TruLaser Cell 7000 Serie anbietet, muss sichergestellt sein, dass auch in einem Arbeitsbereich im Inneren der Laserschutzkabine, an dem keine Laserbearbeitung stattfindet, die vorgeschriebenen Strahlungsgrenzwerte für die zugängliche Strahlung eingehalten werden.

Die Aufgabe der Erfindung besteht darin, eine Laserschutzkabine und eine Laserbearbeitungsanlage bereitzustellen, bei der einem Bediener auch innerhalb der Laserschutzkabine in einem Arbeitsbereich , in dem gerade keine Laserbearbeitung durchgeführt wird, ausreichender Schutz vor Laserstrahlung aus einem anderen Arbeitsbereich geboten werden kann.

Eine Laserschutzkabine gemäß der Erfindung ist im Anspruch 1 definiert.

Erfindungsgemäß weist die Laserschutzkabine im zweiten seitlichen Wandbereich einen Laserstrahlreflektor und im ersten Wandbereich eine absorbierende und/oder diffus streuende Oberfläche auf. Der erste Wandbereich ist hierbei so angeordnet, dass bei der Reflexion von Laserstrahlung an dem ersten Wandbereich Laserstrahlung von einem ersten Arbeitsbereich, in dem eine Laserbearbeitung stattfindet, in einen gerade nicht zur Laserbearbeitung genutzten Arbeitsbereich erfolgen könnte. Um dies zu verhindern bzw. die Strahlungsintensität in einem gerade nicht zur Laserbearbeitung genutzten Arbeitsbereich auf ein Niveau unterhalb der festgelegten Grenzwerte zu reduzieren, ist der erste Wandbereich mit der absorbierenden und/oder diffus streuenden Oberfläche versehen. Der Laserstrahlreflektor ist dabei derart angeordnet, dass an diesem reflektierte Laserstrahlung auf die absorbierende und/oder diffus streuende Oberfläche trifft. Dies kann insbesondere dann erreicht werden, wenn der Laserstrahlreflektor zumindest in einem an den ersten Wandbereich angrenzenden Teilbereich des zweiten Wandbereichs vorgesehen ist.

Verläuft eine Trenneinrichtung zwischen zwei Arbeitsbereichen z.B. in vertikaler Richtung, kann dieser Teilbereich beispielsweise oberhalb der Trenneinrichtung zwischen den beiden Arbeitsbereichen gebildet sein, so dass von den Arbeitsbereichen ausgehende Laserstrahlung an dem Laserstrahlreflektor zum Deckenbereich reflektiert wird.

Das Vorsehen von Laserstrahlreflektoren an den seitlichen Wandbereichen ermöglicht eine gerichtete Reflexion zum Deckenbereich. Beim Vorsehen von diffusen Reflektoren an den seitlichen Wandbereichen wäre hingegen die diffus reflektierte Strahlung näher am Bediener, so dass die Belastung dort höher ausfiele. Daher wird die absorbierende und/oder diffus streuende Oberfläche typischer Weise auf den Deckenbereich beschränkt.

Durch die oben beschriebenen Maßnahmen ist sichergestellt, dass aus einem jeweiligen Arbeitsbereich austretende Laserstrahlung zum ersten Wandbereich gelangt, an dem sie absorbiert bzw. diffus gestreut wird, so dass die ggf. vom ersten Wandbereich in einen weiteren Arbeitsraum abgegebene Laserstrahlung nur noch eine so geringe Intensität aufweist, dass diese auf einen zulässigen Grenzwert beschränkt wird, und zwar insbesondere auch für den Fall, dass die Laserbearbeitungsmaschine mit einem Festkörperlaser betrieben wird, bei dem die Strahlungsgrenzwerte besonders niedrig sind.

Bei einer bevorzugten Ausführungsform ist die diffus streuende Oberfläche durch eine Oberflächenstruktur an einem Substrat, insbesondere an einem metallischen Substrat, gebildet. Diese Oberflächenstruktur wird durch Unebenheiten an der Oberfläche des insbesondere metallischen Substrats erzeugt. Diese Unebenheiten können beispielsweise durch regelmäßige oder unregelmäßige Einbuchtungen, Erhebungen oder dergleichen gebildet werden. Trifft ein Laserstrahl auf eine solche Oberflächenstruktur, wird er diffus, d.h. in mehrere Richtungen, gestreut. Die Energie der gestreuten Laserstrahlung wird daher - im Gegensatz zur Reflexion in einer einzigen Richtung - über einen größeren Raumwinkelbereich verteilt.

Insbesondere ermöglicht es die Kombination der Oberflächenstruktur mit einer absorbierenden Schicht, welche auf die Oberflächenstruktur aufgebracht und hinreichend dünn ist, dass die Oberseite der Schicht im Wesentlichen die Unebenheiten des Substrats reproduziert. Hierdurch kann die Empfindlichkeit der absorbierenden Schicht gegenüber Verschmutzungen (z.B. Schmauch, Öl, etc.) reduziert werden, da sich diese in den Vertiefungen der Oberflächenstruktur absetzen, während die Erhöhungen noch den Ursprungszustand besitzen und daher weiterhin die Laserstrahlung in ausreichendem Maße absorbieren.

Eine Weiterbildung der eben beschriebenen Ausführungsform ist dadurch gekennzeichnet, dass die Oberflächenstruktur durch Aufrauen des insbesondere metallischen Substrats bis zu einer Rautiefe von mindestens 10 µm, bevorzugt von mindestens 30 µm gebildet ist. Für eine optimale Streuung der einfallenden Laserstrahlung bzw. Schutzwirkung vor Verschmutzung muss eine besonders raue Oberfläche erzeugt werden. Bevorzugt wird die Oberflächenstruktur durch Sandstrahlen oder durch Strahlen mit Hartguss hergestellt. Mit diesem Verfahren können beispielsweise Rautiefen von ca. R_{z}= 30 µm und mehr erzeugt werden.

Besonders bevorzugt ist eine Weiterbildung der oben beschriebenen Ausführungsform, bei der das metallische Substrat Aluminium ist. Aluminium weist eine hohe Wärmeleitfähigkeit auf. Dies ist besonders vorteilhaft, wenn ein hohes Maß an Energie in das Material eingebracht wird, wie beispielsweise bei der Absorption von Laserstrahlung, wenn eine absorbierende Schicht auf dieses aufgebracht wird (s.u.). Darüber hinaus weist Aluminium ein verhältnismäßig geringes Gewicht auf und ist einfach zu bearbeiten.

Bei einer weiteren Ausführungsform ist die absorbierende Oberfläche an einer die Laserstrahlung absorbierenden Schicht gebildet. Typischer Weise wird die absorbierende Schicht auf ein Trägermaterial aufgebracht, welches selbst ein eher geringes Absorptionsvermögen für die Laserstrahlung aufweist. Beispielsweise kann die absorbierende Schicht auf ein metallisches Substrat aufgebracht werden. Erfolgt eine Absorption von Laserstrahlung, erwärmt sich die absorbierende Schicht aufgrund des hohen Energieeintrages. Durch eine hohe Wärmeleitfähigkeit des bevorzugt metallischen Substrats wird die thermische Belastung der absorbierenden Schicht sowie des Substrats selbst aber möglichst gering gehalten. Dies erhöht die Haltbarkeit der absorbierenden Schicht. Es versteht sich, dass die absorbierende Schicht insbesondere auf die Oberfläche eines bevorzugt metallischen Substrats aufgebracht werden kann, wobei deren Schichtdicke so gewählt ist, dass die Oberfläche der absorbierenden Schicht im Wesentlichen die Oberflächenstruktur des Substrats reproduziert. Auf diese Weise kann eine absorbierende und (diffus) streuende Oberfläche gebildet werden, welche besonders effektiv zur Reduzierung der Bestrahlungsstärke in der Laserschutzkabine beiträgt.

Besonders bevorzugt ist eine Weiterbildung der eben beschriebenen Ausführungsform, bei der die absorbierende Schicht durch eine schwarze, matte Lackschicht gebildet ist. Beispielsweise kann hitzebeständiger Nasslack verwendet werden, um die absorbierende Schicht herzustellen. Eine solche Lackschicht bewirkt eine optimale Absorption und kann besonders einfach aufgebracht werden.

Bei einer weiteren Ausführungsform ist mindestens eine Drahtgeflechtschicht von der absorbierenden und/oder diffus streuenden Oberfläche beabstandet angeordnet. Eine Drahtgeflechtschicht erhöht ggf. die Streuwirkung und reduziert die Schmutzempfindlichkeit der absorbierenden und/oder diffus streuenden Oberfläche. Auch wird die von der absorbierenden und/oder diffus streuenden Oberfläche (diffus) reflektierte Reststrahlung von der Drahtgeflechtschicht zum Teil abgefangen. Bevorzugt ist die Drahtgeflechtschicht in einem Abstand von ca. 20 mm zu der Oberfläche angeordnet. Jede weitere Drahtgeflechtschicht, die von der vorherigen Drahtgeflechtschicht z.B. ebenfalls in einem Abstand von ca. 20 mm beabstandet angeordnet wird, erhöht die Streuwirkung zusätzlich. Dieser Effekt verläuft jedoch nicht linear, weshalb durch die Anbringung von mehr als zwei Drahtgeflechtschichten in der Regel keine signifikanten Effizienzsteigerungen mehr erzielt werden.

Bei einer weiteren bevorzugten Ausführungsform ist der Laserstrahlreflektor als blanke metallische Oberfläche ausgebildet. Beispielsweise wird blankes Aluminium als Laserstrahlreflektor verwendet. Dieses Material weist ein sehr hohes Reflexionsvermögen, ein geringes Gewicht und eine hohe Wärmeleitfähigkeit auf, so dass punktuell auftreffende, intensive Laserstrahlung nicht zu einer Zerstörung des Laserstrahlreflektors führt. Gemäß der Erfindung ist der Laserstrahlreflektor unter einem rechten Winkel oder unter einem spitzen Winkel zum ersten Wandbereich ausgerichtet. Durch eine solche Ausrichtung kann die gerichtete Reflexion zum Deckenbereich verbessert werden. Zu diesem Zweck haben sich insbesondere Winkel zwischen ca. 80° bzw. 85° und 90° als günstig erwiesen.

In den Rahmen der Erfindung fällt des Weiteren eine Laserbearbeitungsanlage umfassend eine Laserbearbeitungsmaschine zur Laserbearbeitung eines Werkstücks, sowie eine Laserschutzkabine wie oben beschrieben. Mittels der Laserschutzkabine wird die Arbeitsraumumgebung der Laserbearbeitungsanlage sowie ein Arbeitsbereich im Inneren der Laserschutzkabine, an welchem gerade keine Laserbearbeitung stattfindet, vor der Laserstrahlung geschützt, die durch die Laserbearbeitungsmaschine entsteht.

Eine Weiterbildung der Laserbearbeitungsanlage ist dadurch gekennzeichnet, dass in dem Arbeitsraum eine insbesondere vertikale Trenneinrichtung zur Aufteilung des Arbeitsraums in mindestens zwei Arbeitsbereiche angebracht ist, wobei die Trenneinrichtung sich nicht bis zum ersten Wandbereich erstreckt. Wenn zwei (oder mehr) insbesondere benachbarte Arbeitsbereiche innerhalb der Laserschutzkabine vorgesehen sind, kann z.B. ein Arbeitsbereich mit zu bearbeitendem Material bestückt bzw. bearbeitetes Material aus diesem entfernt werden, während gleichzeitig an einem anderen Arbeitsbereich eine Messung bzw. Prüfung und in einem weiteren Arbeitsbereich eine Laserbearbeitung durchgeführt wird. Dies führt zu einer Zeitersparnis und damit zu einer erhöhten Produktivität der Laserbearbeitungsanlage. Die Trenneinrichtung dient zur Abschirmung von Laserstrahlung, die bei der Laserbearbeitung im einem der Arbeitsbereiche entsteht. Die Trenneinrichtung erstreckt sich hierbei in der Regel nicht bis zum ersten Wandbereich, um gemeinsam genutzte Arbeitsmittel zwischen den Arbeitsbereichen transportieren zu können. Um zu verhindern, dass die Laserstrahlung in möglicherweise schädigender Strahlungsintensität von einem Arbeitsbereich in einen weiteren Arbeitsbereich reflektiert wird, ist der erste Wandbereich mit einer absorbierenden und/oder streuenden Oberfläche versehen.

Bei einer bevorzugten Weiterbildung der oben beschriebenen Laserbearbeitungsanlage ist der an den ersten Wandbereich angrenzende Teilbereich des zweiten Wandbereichs mit dem Laserstrahlreflektor auf den Bereich begrenzt, in den sich die Trenneinrichtung nicht erstreckt. Bei einer vertikalen Trenneinrichtung kann der Teilbereich des seitlichen Wandbereichs in einer Höhe von z.B. 1800 mm oder 2000 mm über dem Boden beginnen, auf den die Laserschutzkabine gestellt wird. Nur die Laserstrahlung, die von der Trenneinrichtung nicht mehr erfasst wird, wird in diesem Fall von dem Laserreflektor zum Deckenbereich reflektiert und dort absorbiert und/oder diffus reflektiert.

Bevorzugt ist eine Weiterbildung der Laserbearbeitungsanlage, bei der in dem Arbeitsraum insbesondere oberhalb der Trenneinrichtung eine Bewegungseinrichtung zur Bewegung eines Laserbearbeitungskopfs angebracht ist, wobei die Bewegungseinrichtung ausgebildet ist, die Trenneinrichtung beim Wechsel der Arbeitsbereiche zu überfahren. Die Bewegungseinrichtung, z.B. ein Linearantrieb zur Bewegung der Aufhängung des Laserbearbeitungskopfs entlang einer Führungsschiene, ermöglicht es, zwei oder mehr Arbeitsbereiche anzufahren und abwechselnd Bauteile in den Arbeitsbereichen zu bearbeiten.

Bei einer Weiterbildung der eben beschriebenen Ausführungsform weist die Bewegungseinrichtung und/oder weitere Bauteile, die in dem Bereich angeordnet sind, in den sich die Trenneinrichtung nicht erstreckt, eine absorbierende und/oder diffus reflektierende Oberfläche auf. Auch die Bewegungseinrichtung und ggf. weitere innerhalb der Laserschutzkabine angeordnete Bauteile können in dem Bereich, in den sich die Trenneinrichtung nicht erstreckt, z.B. oberhalb der Trenneinrichtung, d.h. ab einer Höhe von ca. 1800 mm oder 2000 mm über dem Boden mit einer absorbierenden und/oder diffus streuenden Oberfläche verkleidet werden. Dies vermeidet ein unkontrolliertes Ausbreiten der Laserstrahlung in dem Arbeitsraum durch ungewollte Reflexion an diesen Bauteilen.

Bei einer Weiterbildung der oben beschriebenen Laserbearbeitungsanlage weist die Bewegungseinrichtung und/oder weitere Bauteile, die in dem Bereich angeordnet sind, in den sich die Trenneinrichtung nicht erstreckt, einen Laserstrahlreflektor zur Reflexion von Laserstrahlung zu dem ersten Wandbereich auf. Hierbei können insbesondere Flächen, welche so ausgerichtet sind, dass sie die Laserstrahlung zu den Arbeitsbereichen zurück reflektieren würden, mit einem Laserstrahlreflektor abgeschirmt werden, der so ausgerichtet ist, dass die Laserstrahlung zum ersten Wandbereich umgelenkt wird.

Besonders bevorzugt ist eine Weiterbildung der oben beschriebenen Laserbearbeitungsanlage, bei der die Laserbearbeitungsmaschine einen Festkörperlaser zur Erzeugung der Laserstrahlung umfasst. Das Gefährdungspotenzial für das menschliche Auge ist bei Laserstrahlung, die von Festköperlasern erzeugt wird, aufgrund der hierbei verwendeten Wellenlängen (im oder nahe beim sichtbaren Wellenlängen-Bereich) deutlich größer als bei Laserstrahlung, die von CO₂-Lasern (im IR-Bereich) erzeugt wird. Entsprechend sind auch die Strahlungsgrenzwerte, die bei der Verwendung von Festkörperlasern eingehalten werden müssen, um ca. einen Faktor 20 niedriger als z.B. bei CO₂-Lasern.

Weitere Vorteile der Erfindung ergeben sich aus der Beschreibung und den Zeichnungen. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine Laserbearbeitungsanlage mit einer Laserbearbeitungsmaschine und einer Laserschutzkabine nach dem Stand der Technik,
- Fig. 2: eine erfindungsgemäße Laserbearbeitungsanlage mit einer Laserbearbeitungsmaschine und einer Laserschutzkabine,
- Fig. 3: ein metallisches Substrat mit einer absorbierenden Schicht und zwei Drahtgeflechtschichten in einer Schnittdarstellung, sowie
- Fig. 4: eine Drahtgeflechtschicht in der Draufsicht.

Im Folgenden sind identische Gegenstände mit gleichen Bezugszeichen versehen.

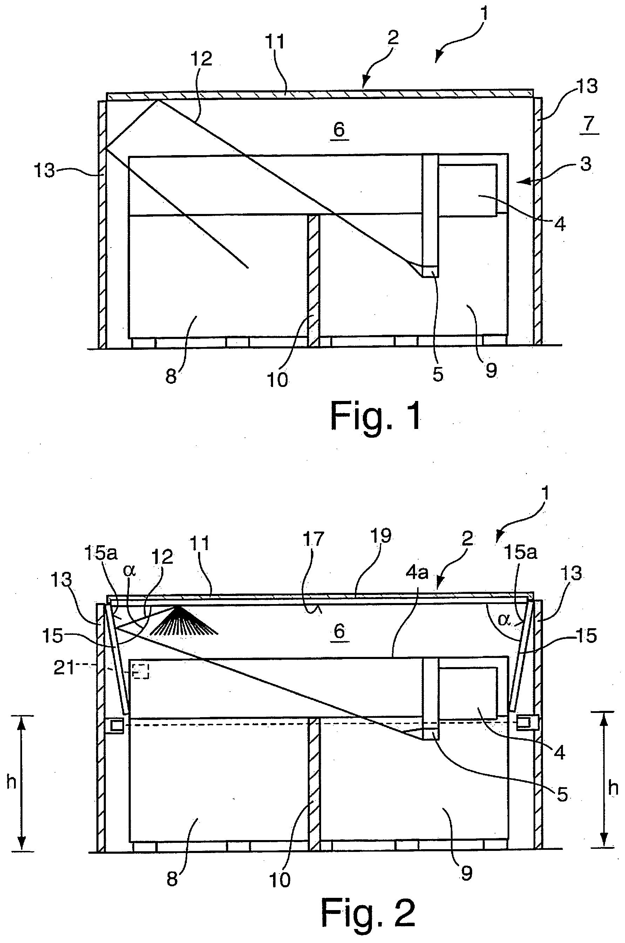

Fig. 1 zeigt eine Laserbearbeitungsanlage 1 mit einer Laserschutzkabine 2 und einer in der Laserschutzkabine 2 angeordnete Laserbearbeitungsmaschine 3 zur 3D-Laserbearbeitung, insbesondere zum Laserschneiden, von (nicht gezeigten) Werkstücken. Die Laserbearbeitungsmaschine 3 umfasst eine Bewegungseinrichtung 4 zur Bewegung eines Laserbearbeitungskopfes 5.

Die Laserschutzkabine 2 grenzt einen Arbeitsraum 6 von einer Arbeitsraumumgebung 7 ab. Der von der Laserschutzkabine 2 eingeschlossene Arbeitsraum 6 weist einen ersten Arbeitsbereich 8 und einen zweiten Arbeitsbereich 9 auf, an denen jeweils eine Laserbearbeitung durchgeführt werden kann. Die räumliche Trennung zwischen dem ersten und dem zweiten Arbeitsbereich 8, 9 wird durch eine als laserfeste Trennwand 10 ausgebildete Trenneinrichtung erreicht. Die Trennwand 10 verhindert den Durchtritt von Laserstrahlung zwischen den beiden Arbeitsbereichen 8,9, reicht aber nicht bis zu einem horizontal verlaufenden Deckenbereich 11 der Laserschutzkabine 2, um ein Bewegen des Laserbearbeitungskopfs 5 von zweiten Arbeitsbereich 9 zu dem ersten Arbeitsbereich 8 und umgekehrt zu ermöglichen. Ein Bewegen des Laserbearbeitungskopfs 5 zwischen den Arbeitsbereichen 8,9 erfolgt durch eine Linearverschiebung des Laserbearbeitungskopfs 5 in horizontaler Richtung mittels der Bewegungseinrichtung 4, an welcher der Laserbearbeitungskopf 5 angebracht ist. Je nach Position des Laserbearbeitungskopfs 5 erfolgt zur Kollisionsvermeidung und/oder Verfahrstrategie parallel eine Verschiebung in vertikaler Richtung.

Wie in Fig. 1 dargestellt ist, kann sich bei der Laserbearbeitung im zweiten Arbeitsbereich 9 Laserstrahlung 12 von dem Laserbearbeitungskopf 5 aus über die Trennwand 10 hinweg in Richtung der Decke 11 ausbreiten. Die Laserstrahlung 12 wird dann von der Decke 11 auf einen seitlichen Wandbereich 13 (Seitenwand) der Laserschutzkabine 2 und von dort in Richtung des ersten Arbeitsbereichs 8 reflektiert. Befindet sich zu diesem Zeitpunkt eine Person im ersten Arbeitsbereich 8, kann diese durch die reflektierte, in einem kleinen Raumbereich konzentrierte Laserstrahlung 12 z.B. am Auge geschädigt werden, falls die Laserstrahlung 12 dort einen vorgegebenen Grenzwert der Bestrahlungsstärke überschreitet.

Eine Laserbearbeitungsanlage 1, welche dieses Problem vermeidet, ist in Fig. 2 dargestellt. Die Laserschutzkabine 2 weist an der Innenseite der seitlichen Wände 13 jeweils in einem oberen, dem Deckenbereich 11 benachbarten Teilbereich einen Laserstrahlreflektor 15 auf, der aus einer Metallscheibe, z.B. aus Aluminium, besteht, welches eine blanke, reflektierende Oberfläche 15a aufweist. Hierbei können die seitlichen Wände 13 an ihrer Innenseite als Laserstrahlreflektor 15 ausgebildet sein (nicht gezeigt). Bei dem in Fig. 2 dargestellten Beispiel ist der Laserstrahlreflektor 15 an der Innenseite der seitlichen Wände 13 angebracht, schließt aber mit dem Deckenbereich 11 einen spitzen Winkel α von z.B. 85° ein, um die gerichtete Reflexion in Richtung des Deckenbereichs 11 zu verbessern. Es versteht sich, dass der Winkel α so gewählt sein muss, dass der Laserstrahlreflektor 15 nicht mit weiteren in der Laserschutzkabine 2 angeordneten Bauelementen kollidiert.

Die Teilbereiche mit dem Laserstrahlreflektor 15 beginnen ab einer Höhe h von ca. 2000 mm gemessen vom Boden aus, auf dem die Laserschutzkabine 2 bzw. die Laserbearbeitungsmaschine 3 angeordnet sind und erstrecken sich bis zum oberen Ende der seitlichen Wände 13. Die Höhe h entspricht hierbei im Wesentlichen der Höhe der Trennwand 10, welche die beiden Arbeitsbereiche 8,9 voneinander trennt und welche bis zu einem in horizontaler Richtung verlaufenden Träger 4a reicht, der Teil der Bewegungseinrichtung 4 ist.

An der Innenseite der Decke 11 ist eine metallische Trägerplatte 19 als Substrat angebracht, an der eine diffus streuende und absorbierende Oberfläche 17 gebildet ist. In einer alternativen Ausführung kann die metallische Trägerplatte 19 selbst die Decke 11 bilden. Die Trägerplatte 19 besteht bevorzugt aus Aluminium. Es können aber auch andere Materialien, insbesondere Metalle, mit einer hohen Wärmeleitfähigkeit als metallisches Substrat 19 verwendet werden.

Trifft wie in Fig. 2 dargestellt Laserstrahlung 12 auf die Laserstrahlreflektoren 15 der seitlichen Wände 13, wird diese in Richtung der absorbierenden und diffus streuenden Oberfläche 17 der Decke 11 reflektiert, da die Laserstrahlreflektoren 15 oberhalb der Arbeitsbereiche 8,9 angeordnet sind. Ein Großteil der Laserstrahlung 12 wird hierbei an der Oberfläche 17 absorbiert und nur der nicht absorbierte Teil der Laserstrahlung 12 wird von der streuenden Oberfläche 17 diffus ins Innere des Arbeitsraums 6 zurück gestreut. Trifft Laserstrahlung 12 direkt auf die absorbierende und diffus streuende Oberfläche 17, so wird diese ebenfalls größtenteils absorbiert und lediglich zu einem kleinen Teil ins Innere des Arbeitsraums 6 zurück gestreut. Auf diese Weise wird die Intensität der Laserstrahlung 12, die vom zweiten Arbeitsbereich 9 in den ersten Arbeitsbereich 8 gelangt, so stark reduziert, dass die Grenzwerte der Bestrahlungsstärke eingehalten werden können.

Zusätzlich zur Decke 11 sollten auch alle weiteren potentiell reflektierenden Objekte im Inneren des Arbeitsraums 6, die oberhalb der Trennwand 10 angeordnet sind, insbesondere die Bewegungseinrichtung 4 mit dem Träger 4a, wahlweise mit einer diffus streuenden bzw. absorbierenden Oberfläche oder mit einer blanken metallischen Oberfläche versehen werden. Blanke metallische Oberflächen als Abschirmung sollten nur verwendet werden, wenn diese so ausgerichtet werden, dass die Laserstrahlung 12 von diesen zur Decke 11 bzw. nicht in einen der Arbeitsbereiche 8, 9 reflektiert wird.

Es versteht sich, dass von der Laserschutzkabine 2 lediglich die Seitenwände 13 und die Decke 11 gezeigt wurden, dass aber selbstverständlich auch die (nicht gezeigte) Vorder- und Rückseite der Laserschutzkabine 2 mit einem Laserstrahlreflektor 15 ausgestattet sind. Auch muss die Laserschutzkabine 2 nicht zwingend wie in Fig. 2 dargestellt eine im Schnitt im Wesentlichen rechteckige Geometrie aufweisen, sondern kann auch eine andere Form annehmen.

Es versteht sich auch, dass die absorbierende und/oder diffus streuende Oberfläche 17 nicht zwingend an einer Deckenfläche der Laserschutzkabine 2 gebildet sein muss. Beispielsweise kann in dem Fall, dass die Trennwand 10 sich zwar bis zur Decke 11, aber nicht bis zu einer seitlichen Wand der Laserschutzkabine erstreckt, diese seitliche Wand mit einer absorbierenden und/oder diffus streuenden Oberfläche versehen sein, um eine Reflexion und damit ein Übergang von Laserstrahlung zwischen den Arbeitsbereichen 8, 9 zu verhindern. In diesem (nicht dargestellten) Beispiel ist die Bewegungseinrichtung nicht oberhalb, sondern seitlich zu den Arbeitsbereichen 8, 9 angeordnet.

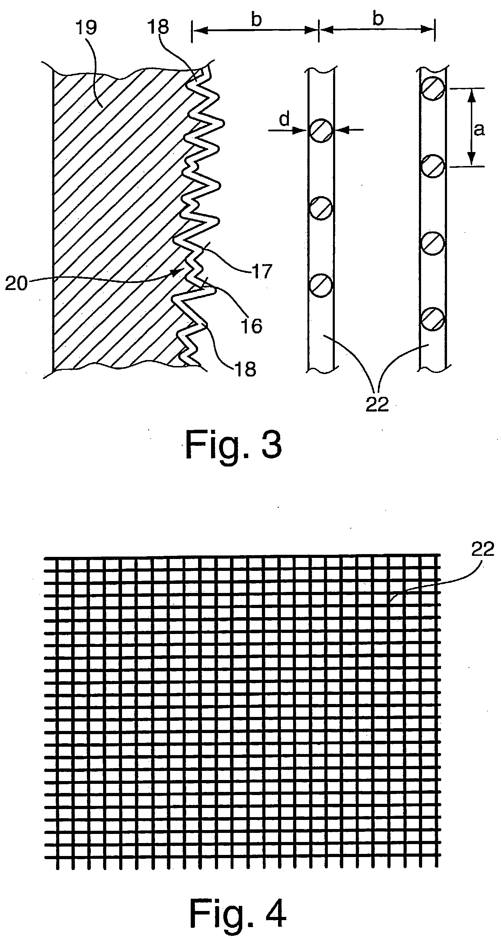

Nachfolgend wird anhand von Fig. 3 beschrieben, wie die absorbierende und streuende Oberfläche 17 an der metallischen Trägerplatte 19 (Substrat) erzeugt wird. Das metallische Substrat 19 weist an seiner in Fig. 3 dargestellten rechten Seite eine Oberfläche 16 auf, an der eine Oberflächenstruktur 20 gebildet ist. Die Oberflächenstruktur 20 besteht aus Unebenheiten, die durch Aufrauen des metallischen Substrats 19 erzeugt wurden. Beispielsweise kann das Aufrauen des metallischen Substrats 19 mittels Sandstrahlen oder durch Strahlen mit Hartguss erfolgen. Es können aber auch andere Bearbeitungsverfahren eingesetzt werden, mittels derer eine Oberflächenstruktur 20 mit einer Rautiefe von mindestens R_{z}=10 µm, günstiger mit einer Rautiefe von mindestens ca. R_{z}=30 µm erzeugt werden kann. Durch die Oberflächenstruktur 20 dient die Oberfläche 16 des metallischen Substrats 19 als Streufläche.

Auf die diffus streuende Oberfläche 16 ist eine absorbierende Schicht 18 aufgebracht. Diese besteht im vorliegenden Beispiel aus einer schwarzen, matten und hitzebeständigen Lackschicht in Form von Nasslack. Die Schicht 18 aus Nasslack absorbiert Laserstrahlung 12 und überträgt die hierbei aufgenommene Energie an das metallische Substrat 19, welches diese aufgrund seiner hohen Wärmeleitfähigkeit schnell abführen kann. Die Schicht 18 weist eine geringere Schichtdicke als die Rautiefe auf, so dass die äußere Oberfläche 17 der absorbierenden Schicht 18 im Wesentlichen die Oberflächenstruktur 20 des Substrats 19 reproduziert und somit eine zugleich absorbierende und streuende Fläche bildet.

In Fig. 3 ebenfalls zu erkennen sind zwei von der absorbierenden Schicht 18 beabstandet angeordnete Drahtgeflechtschichten 22. Bevorzugt wird ein Abstand b zwischen der absorbierenden Schicht 18 und der ersten Drahtgeflechtschicht 22 von ca. b=20 mm gewählt. Die zweite und jede weitere Drahtgeflechtschicht 22 wird ebenfalls mit einem Abstand von ca. b=20 mm zur jeweils vorhergehenden Drahtgeflechtschicht 22 angeordnet. Der Drahtdurchmesser d einer jeweiligen Drahtgeflechtschicht 22 ist von der (maximalen) Laserleistung der Laserbearbeitungsmaschine abhängig. Eine hohe Laserleistung bedingt einen größeren Drahtdurchmesser, um die Standzeit sicherzustellen. Dies ist insbesondere dann der Fall, wenn die Drahtgeflechtschicht 22 wie im vorliegenden Beispiel mit einer absorbierenden Schicht aus schwarzem, matten und hitzebeständigen Nasslack versehen ist, der bei größerem Drahtdurchmesser effektiver vor Überhitzung geschützt werden kann. Der Drahtdurchmesser kann z.B. ca. d=1 mm betragen. Die einzelnen Drähte haben einen Abstand a voneinander, der in Abhängigkeit von der gewünschten Durchlässigkeit (in %) der Drahtgeflechtschicht 22 gewählt wird und z.B. bei ca. a=5 mm liegen kann. Die Drahtgeflechtschichten 22 können an der dem Arbeitsraum 6 zugewandten Seite der Decke 11 der Laserschutzkabine 2 bzw. an der Trägerplatte 19 z.B. unter Verwendung von Abstandshaltern angebracht werden, die selbst keine Laserstrahlung reflektieren.

Fig. 4 zeigt eine Drahtgeflechtschicht 22 mit Quadratmaschen in Leinwandbindung und einem Drahtdurchmesser von ca. 1 mm. Die Drahtgeflechtschicht 22 wirkt als durchlässiger Absorber und besitzt eine Durchlässigkeit von 50 % in beide Richtungen, d.h., dass nur 50 % sowohl der zu der absorbierenden und diffus streuenden Oberfläche 17 umgelenkten als auch der von dieser reflektierten Laserstrahlung 12 die Drahtgeflechtschicht 22 passieren können. Wie in Fig. 3 zu erkennen ist, sind die Drähte von unterschiedlichen Drahtgeflechtschichten 22 zueinander versetzt angeordnet, um die Streuwirkung zu erhöhen bzw. die Durchlässigkeit zu reduzieren und um Schmutz von der absorbierenden und diffus streuenden Schicht 17 fernzuhalten.

Insbesondere bei der Verwendung von mehreren Drahtgeflechtschichten 22 ist es ggf. auch möglich, an der Innenseite der Decke 11 eine Oberfläche vorzusehen, welche lediglich streuend oder lediglich absorbierend ausgebildet ist. Im ersten Fall kann auf die absorbierende Schicht 18 auf der Oberflächenstruktur 20 verzichtet werden, im zweiten Fall kann eine absorbierende Schicht 18 z.B. auf eine blanke, plane Metallfläche aufgebracht werden. Auch in diesem Fall können ggf. die (niedrigen) Grenzwerte für die Bestrahlungsstärke in der Laserschutzkabine 2 eingehalten werden, die bei der Verwendung eines Festkörperlasers 21 (vgl. Fig. 2) zur Erzeugung der Laserstrahlung gelten.

## Patentansprüche

1. Laserschutzkabine (2) zur Abgrenzung eines Arbeitsraums (6) für die Laserbearbeitung von einer Arbeitsraumumgebung (7), umfassend einen ersten Wandbereich (11) in Form eines Deckenbereichs und einen zweiten, seitlichen Wandbereich (13),
**dadurch gekennzeichnet,**
**dass** der zweite Wandbereich (13) an seiner dem Arbeitsraum (6) zugewandten Innenseite insbesondere in einem an den ersten Wandbereich (11) angrenzenden Teilbereich einen Laserstrahlreflektor (15) aufweist, der unter einem rechten Winkel oder unter einem spitzen Winkel (α) zum ersten Wandbereich (11) ausgerichtet und der ausgebildet ist, bei der Laserbearbeitung erzeugte Laserstrahlung (12) gerichtet zum ersten Wandbereich (11) zu reflektieren, und dass der erste Wandbereich (11) an seiner dem Arbeitsraum (6) zugewandten Innenseite eine die Laserstrahlung (12) absorbierende und/oder diffus streuende Oberfläche (16, 17) aufweist.

2. Laserschutzkabine nach Anspruch 1, **dadurch gekennzeichnet, dass** die diffus streuende Oberfläche (16) durch eine Oberflächenstruktur (20) an einem Substrat, insbesondere einem metallischen Substrat (19), gebildet ist.

3. Laserschutzkabine nach Anspruch 2, **dadurch gekennzeichnet, dass** die Oberflächenstruktur (20) durch Aufrauen des Substrats (19) bis zu einer Rautiefe von mindestens 10 µm, bevorzugt von mindestens 30 µm gebildet ist.

4. Laserschutzkabine nach Anspruch 2 oder 3, **dadurch gekennzeichnet, dass** das metallische Substrat (19) aus Aluminium gebildet ist.

5. Laserschutzkabine nach einem der vorhergehenden Ansprüche, **dadurch gekennzeichnet, dass** die absorbierende Oberfläche (17) an einer die Laserstrahlung (12) absorbierenden Schicht (18) gebildet ist.

6. Laserschutzkabine nach Anspruch 5, **dadurch gekennzeichnet, dass** die absorbierende Schicht (18) durch eine schwarze, matte Lackschicht gebildet ist.

7. Laserschutzkabine nach einem der vorhergehenden Ansprüche, **dadurch gekennzeichnet, dass** der Laserstrahlreflektor (15) eine blanke metallische Oberfläche (15a) aufweist.

8. Laserschutzkabine nach einem der vorhergehenden Ansprüche, **dadurch gekennzeichnet, dass** mindestens eine Drahtgeflechtschicht (22) von der absorbierenden und/oder diffus streuenden Oberfläche (16, 17) beabstandet angeordnet ist.

9. Laserbearbeitungsanlage (1), umfassend:
eine Laserbearbeitungsmaschine (3) zur Laserbearbeitung eines Werkstücks, sowie eine Laserschutzkabine (2) nach einem der vorhergehenden Ansprüche.

10. Laserbearbeitungsanlage nach Anspruch 9, **dadurch gekennzeichnet, dass** in dem Arbeitsraum (6) eine insbesondere vertikale Trenneinrichtung (10) zur Aufteilung des Arbeitsraums (6) in mindestens zwei Arbeitsbereiche (8, 9) angebracht ist, wobei die Trenneinrichtung (10) sich nicht bis zum ersten Wandbereich (11) erstreckt.

11. Laserbearbeitungsanlage nach Anspruch 10, **dadurch gekennzeichnet, dass** der an den ersten Wandbereich (11) angrenzende Teilbereich des zweiten Wandbereichs (13) mit dem Laserstrahlreflektor (15) auf den Bereich begrenzt ist, in den sich die Trenneinrichtung (10) nicht erstreckt.

12. Laserbearbeitungsanlage nach Anspruch 10 oder 11, **dadurch gekennzeichnet, dass** in dem Arbeitsraum (6) insbesondere oberhalb der Trenneinrichtung (10) eine Bewegungseinrichtung (4) zur Bewegung eines Laserbearbeitungskopfs (5) angebracht ist, wobei die Bewegungseinrichtung (4) ausgebildet ist, die Trenneinrichtung (10) beim Wechsel der Arbeitsbereiche (8, 9) zu überfahren.

13. Laserbearbeitungsanlage nach Anspruch 12, **dadurch gekennzeichnet, dass** die Bewegungseinrichtung (4) und/oder weitere Bauteile, die in dem Bereich angeordnet sind, in den sich die Trenneinrichtung (10) nicht erstreckt, eine absorbierende und/oder diffus streuende Oberfläche aufweisen.

14. Laserbearbeitungsanlage nach Anspruch 12 oder 13, **dadurch gekennzeichnet, dass** die Bewegungseinrichtung (4) und/oder weitere Bauteile, die in dem Bereich angeordnet sind, in den sich die Trenneinrichtung (10) nicht erstreckt, einen Laserstrahlreflektor zur Reflexion von Laserstrahlung (12) zu dem ersten Wandbereich (11) aufweisen.

15. Laserbearbeitungsanlage nach einem der Ansprüche 9 bis 14, **dadurch gekennzeichnet, dass** die Laserbearbeitungsmaschine (3) einen Festkörperlaser (21) zur Erzeugung der Laserstrahlung (12) umfasst.

## Claims

1. Laser protection cabin (2) to separate a working space (6) for laser processing from a working space environment (7),
comprising a first wall area (11) in the form of a ceiling area and a second lateral wall area (13), **characterised in that** the second wall area (13), on its interior side facing the working space (6), in particular in a sub-area adjacent to the first wall area (11), has a laser beam reflector (15) which is aligned at a right angle or an acute angle (α) to the first wall area (11) and is designed for specular reflection of laser radiation (12) created during laser processing to the first wall area (11), and that the first wall area (11) has a surface (16, 17), on its interior side facing the working space (6), that absorbs and/or diffusely scatters the laser radiation (12).

2. Laser protection cabin in accordance with claim 1, **characterised in that** the diffusely scattering surface (16) is created by a surface structure (20) on a substrate, in particular a metallic substrate (19).

3. Laser protection cabin in accordance with claim 2, **characterised in that** the surface structure (20) is created by roughening the substrate (19) to a depth of roughness of at least 10 µm, preferably at least 30 µm.

4. Laser protection cabin in accordance with claim 2 or 3, **characterised in that** the metallic substrate (19) is made from aluminium.

5. Laser protection cabin in accordance with one of the preceding claims, **characterised in that** the absorbent surface (17) is created on a film (18) that absorbs the laser radiation (12).

6. Laser protection cabin in accordance with claim 5,
**characterised in that** the absorbent film (18) is made of a black, matte lacquer film.

7. Laser protection cabin in accordance with one of the preceding claims, **characterised in that** the laser beam reflector (15) has a blank metallic surface (15a).

8. Laser protection cabin in accordance with one of the preceding claims, **characterised in that** at least one wire mesh layer (22) is arranged at a distance from the absorbent and/or diffusely scattering surface (16, 17).

9. Laser processing system (1), comprising: a laser processing machine (3) for laser processing of a workpiece, and a laser protection cabin (2) in accordance with one of the preceding claims.

10. Laser processing system in accordance with claim 9, **characterised in that** an in particular vertical partition device (10) is arranged in the working space (6) to divide the working space (6) into at least two working areas (8, 9), wherein the partition device (10) does not extend to the first wall area (11).

11. Laser processing system in accordance with claim 10, **characterised in that** the sub-area of the second wall area (13) with the laser beam reflector (15) adjacent to the first wall area (11) is restricted to the area into which the partition device (10) does not extend.

12. Laser processing system in accordance with claim 10 or 11, **characterised in that**, in the working space (6) in particular above the partition device (10), a movement device (4) to move a laser processing head (5) is arranged, wherein the movement device (4) is designed to travel across the partition device (10) when working areas (8, 9) are changed.

13. Laser processing system in accordance with claim 12, **characterised in that** the movement device (4) and/or other components arranged in the area into which the partition device (10) does not extend have an absorbent and/or diffusely scattering surface.

14. Laser processing system in accordance with claim 12 or 13, **characterised in that** the movement device (4) and/or other components arranged in the area into which the partition device (10) does not extend have a laser beam reflector to reflect laser radiation (12) to the first wall area (11).

15. Laser processing system in accordance with one of claims 9 to 14, **characterised in that** the laser processing machine (3) comprises a solid state laser (21) to produce the laser radiation (12).

## Revendications

1. Cabine de protection laser (2) destinée à délimiter un espace de travail (6) pour l'usinage au laser d'un environnement d'espace de travail (7), comprenant une première zone de paroi (11) sous la forme d'une zone de plafond et une deuxième zone de paroi (13) latérale,
**caractérisée en ce**
**que** la deuxième zone de paroi (13) présente sur son côté intérieur tourné vers l'espace de travail (6), en particulier dans une zone partielle adjacente à la première zone de paroi (11), un réflecteur de faisceau laser (15) qui est orienté selon un angle droit ou selon un angle aigu (α) par rapport à la première zone de paroi (11) et qui est conçu pour réfléchir de manière spéculaire le rayonnement laser (12) produit lors de l'usinage au laser vers la première zone de paroi (11), et que la première zone de paroi (11) présente sur son côté intérieur tourné vers l'espace de travail (6) une surface (16, 17) qui absorbe et/ou disperse de manière diffuse le rayonnement laser (12).

2. Cabine de protection laser selon la revendication 1, **caractérisée en ce que** la surface (16) qui disperse de manière diffuse est formée par une structure de surface (20) sur un substrat, en particulier un substrat métallique (19).

3. Cabine de protection laser selon la revendication 2, **caractérisée en ce que** la structure de surface (20) est formée en rendant le substrat (19) rugueux jusqu'à une profondeur de rugosité d'au moins 10 µm, de préférence d'au moins 30 µm.

4. Cabine de protection laser selon la revendication 2 ou la revendication 3, **caractérisée en ce que** le substrat métallique (19) est formé d'aluminium.

5. Cabine de protection laser selon l'une des revendications précédentes, **caractérisée en ce que** la surface absorbante (17) est formée sur une couche (18) qui absorbe le rayonnement laser (12).

6. Cabine de protection laser selon la revendication 5, **caractérisée en ce que** la couche absorbante (18) est formée par une couche de peinture noire mate.

7. Cabine de protection laser selon l'une des revendications précédentes, **caractérisée en ce que** le réflecteur de faisceau laser (15) présente une surface métallique nue (15a).

8. Cabine de protection laser selon l'une des revendications précédentes, **caractérisée en ce qu'**au moins une couche de treillis en fil métallique (22) est disposée à distance de la surface (16, 17) qui absorbe et/ou disperse de manière diffuse.

9. Installation d'usinage au laser (1), comprenant :
une machine d'usinage au laser (3) pour l'usinage au laser d'une pièce ainsi qu'une cabine de protection laser (2) selon l'une des revendications précédentes.

10. Installation d'usinage au laser selon la revendication 9, **caractérisée en ce qu'**un dispositif de séparation (10), en particulier vertical, est disposé dans l'espace de travail (6) pour diviser l'espace de travail (6) en au moins deux zones de travail (8, 9), lequel dispositif de séparation (10) ne s'étend pas jusqu'à la première zone de paroi (11).

11. Installation d'usinage au laser selon la revendication 10, **caractérisée en ce que** la zone partielle adjacente à la première zone de paroi (11) de la deuxième zone de paroi (13), qui présente le réflecteur de faisceau laser (15), est limitée à la zone dans laquelle le dispositif de séparation (10) ne s'étend pas.

12. Installation d'usinage au laser selon la revendication 10 ou la revendication 11, **caractérisée en ce qu'**un dispositif de déplacement (4) pour déplacer une tête d'usinage au laser (5) est disposé dans l'espace de travail (6), en particulier au-dessus du dispositif de séparation (10), lequel dispositif de déplacement (4) est conçu pour franchir le dispositif de séparation (10) lors du changement de zones de travail (8, 9).

13. Installation d'usinage au laser selon la revendication 12, **caractérisée en ce que** le dispositif de déplacement (4) et/ou d'autres composants qui sont disposés dans la zone dans laquelle le dispositif de séparation (10) ne s'étend pas présentent une surface absorbante et/ou dispersante de manière diffuse.

14. Installation d'usinage au laser selon la revendication 12 ou la revendication 13, **caractérisée en ce que** le dispositif de déplacement (4) et/ou d'autres composants qui sont disposés dans la zone dans laquelle le dispositif de séparation (10) ne s'étend pas présentent un réflecteur de faisceau laser pour réfléchir le rayonnement laser (12) vers la première zone de paroi (11).

15. Installation d'usinage au laser selon l'une des revendications 9 à 14, **caractérisée en ce que** la machine d'usinage au laser (3) comprend un laser à solide (21) pour produire le rayonnement laser (12).
